# EUROPEAN PATENT SPECIFICATION

(11) **EP 2 812 294 B1**
(45) Date of publication and mention of the grant of the patent: **25.11.2020**
(21) Application number: 13703301.5
(22) Date of filing: 31.01.2013
(51) Int. Cl.: B29C 48/00

(54) **USE OF A CELLULOSE DERIVATIVE FOR THE PRODUCTION OF EXTRUSION-MOLDED CERAMIC BODIES AND A METHOD FOR PRODUCING**
VERWENDUNG EINES CELLULOSEDERIVATS ZUR HERSTELLUNG VON KERAMIKKÖRPER MITTELS EXTRUSION UND EIN VERFAHREN ZUR HERSTELLUNG DER KERAMIKKÖRPER
L'UTILISATION D'UN DÉRIVÉ DE CELLULOSE POUR FABRIQUER DES CORPS CÉRAMIQUES MOULÉS PAR EXTRUSION ET UN PROCÉDÉ POUR FABRIQUER DES CORPS CÉRAMIQUES

(30) Priority: 10.02.2012 US 201261597414 P
(43) Date of publication of application: 17.12.2014
(73) Proprietor: Dow Global Technologies LLC, Midland, MI 48674 (US)
(72) Inventor: BAYER, Roland, 29664 Walsrode (DE); GOERLACH-DOHT, Yvonne, M., 21224 Rosengarten (DE); HERMANNS, Juergen, 21640 Nottensdorf (DE)
(74) Representative: f & e patent
(86) International application number: PCT/US2013/023970
(87) International publication number: WO 2013/119443

(56) References cited:
- EP-A2- 2 345 627
- WO-A1-2011/046679
- WO-A1-2012/138531
- JP-A- 1 111 770
- US-A1- 2011 262 690
- DATABASE WPI Week 198725 Thomson Scientific, London, GB; AN 1987-174385 XP002694033, -& JP 62 105948 A (SHINETSU CHEM IND CO LTD) 16 May 1987 (1987-05-16)

## Description

### FIELD

This invention relates to the use of a cellulose derivative for the production of extrusion-molded bodies and a method for producing them.

### INTRODUCTION

Extrusion molding of ceramic-forming materials has been performed by passing a green body or composition, which is obtained by mixing and/or kneading molding aids such as organic binders, surfactants, lubricants, and plasticizers with ceramic-forming materials through dies having a desired shape into a sheet, a bar, a hollow tube, a rectangular column, a hollow rectangular column, or a honeycomb structure. In particular, extrusion-molded bodies in the form of ceramic honeycombs have been in use as a carrier for exhaust gas cleaning catalysts, filters, and heat exchangers in the fields of automobiles and various industries.

U.S. Patent No. 6,589,627 discusses the need for providing thin-walled honeycomb structures. Accompanying the increasing severity of the automobile controls in recent years, much research is spent on ways to reduce the thickness of cell walls of the cordierite honeycomb structural bodies. Reducing the thickness of cell walls of the cordierite honeycomb structural bodies reduces its heat capacity, which leads to a more rapid activation of the gas purification catalyst and to reduced hydrocarbon emissions immediately after the engine is started.

The production of ceramic honeycomb structural bodies presents a particular challenge. When the thickness of the cell walls of ceramic honeycomb structural bodies is to be reduced in the molding process, e.g., to less than 100 micrometers, the width of the extrusion channels becomes less and the resistance present when the molding material passes through the extrusion channels increases significantly. The outer peripheral surface of the extrudate becomes rough due to frictional resistance between the ceramic body and the wall surfaces of the die. This phenomenon becomes more significant as the hardness of the molding material increases and/or its fluidity decreases. However, if the hardness of the molding material is merely decreased to enhance its fluidity, there occurs the problem in that the extruded honeycomb structural body is deformed due to its self-weight or the extrudate is easily deformed with external forces such as vibration generated in the succeeding steps.

U.S. Patent Application Publication 20100025897 discloses that cellulose ethers are used in compositions for ceramic extrusion-molded bodies as an organic binder because of their excellent plasticity, water retention and thermal gelation characteristics. The use of cellulose ethers in compositions for ceramic extrusion-molded bodies is also disclosed in other patent applications, such as U.S. Patent No. 4,551,295, in European Patent application No's EP 0 652 191, EP 0 714 867 and EP 2 371 785 and in International patent application WO2007/047103.

European Patent No. EP 1 658 164 discusses the difficulties in the production of honeycomb substrates with very thin webs. When conventional extrusion apparatus are used to produce ceramic honeycombs with web wall thicknesses of less than about 0.004 inches (0.01cm), an unacceptably high number of breaks in the web of the cellular extrudate (i.e., areas containing no ceramic material) are observed in the extruded product. The skilled artisans generally believe that these breaks in the ceramic material result from one or more particles from the extrusion material plugging a passage in the extrusion die, resulting in a region where the batch material is restricted from flowing. EP 1 658 164 discloses that it is therefore necessary to ensure that the batch material being extruded is virtually free of large particles and agglomerated batch material. In a standard extrusion process, large particles and agglomerated batch materials contained in the batch material are removed by filtering the batch material upstream of the extrusion die. Filtering is often accomplished by passing the batch material through a wire screen located between the extrusion screw or screws and the die.

JP 6210594 discloses the use of water-soluble cellulose derivatives containing not more than 5 wt.-% of particles of particle size larger than 150 micrometers as binder in the extrusion molding of ceramic bodies.

JP 1111770 relates to the use of cellulose derivatives having a fiber content of defined diameter in molding of ceramic bodies.

EP A 2 345 627 discloses a water-soluble hydroxypropyl methyl cellulose and its use as binder in a ceramic molding composition.

US 2011/0262690 relates to a hydroxypropyl methyl cellulose useful for producing extrusion-molded bodies.

Large particles and agglomerated batch materials are also undesirable when the material is passed through a wire screen. When large particles and agglomerated batch materials accumulate on the screen or on the die, the cross-section and the extrusion output decreases and the extrusion pressure raises. Above a certain extrusion pressure or above a certain amount of defects originating from large particles and agglomerated batch materials the plugging leads to too many defective extruded parts. The die or the screen must be replaced which leads to an interruption in the production process and a decreased output.

The cellulose derivatives, such as the cellulose ethers used in the compositions for ceramic extrusion-molded bodies are generally water-soluble. Cellulose derivatives like cellulose ethers are produced from cellulose, which is water insoluble because the hydrogen bonds are strong enough to prevent hydration with water molecules in water. In the preparation of cellulose ethers, cellulose is treated with an alkaline aqueous solution such as NaOH to convert it to alkali cellulose and disrupt crystallinity, then reacted with a derivatizing reagent, such as an etherifying reagent to substitute the etherifying reagent for hydroxyl groups on the cellulose and form a cellulose ether. Since crystallinity has not completely disappeared in the alkali cellulose, most commercially available cellulose ethers are water-soluble, but partially contain
water-insoluble portions.

It would be desirable to provide a new composition comprising a ceramic-forming material and a cellulose derivative which is suitable for extrusion molding, particularly for producing extrusion-molded bodies having a honeycomb structure. It would be particularly desirable to provide a new composition comprising a ceramic-forming material and a cellulose derivative which displays a reduced plugging of wire screens or dies used before or during extrusion of the composition.

### SUMMARY

One aspect of the present invention relates to the use of a cellulose ether that has a solubility in water of at least one gram in 100 grams of distilled water at 25 °C and 1 atmosphere; having a median particle length of from 110 to 300 micrometers, determined as described in the specification, for the production of an extrusion molded ceramic body, wherein the cellulose ether is obtainable by
- providing a moist cellulose derivative having a moisture content of from 35 to 98 percent, based on the total weight of the moist cellulose derivative, and drying-grinding the moist cellulose derivative in a gas-swept impact mill; or
- by mixing a cellulose derivative with a liquid to provide a moist cellulose derivative having a moisture content of from 35 to 98 percent, based on the total weight of the moist cellulose derivative, and drying-grinding the moist cellulose derivative in a gas-swept impact mill.

Another aspect of the present invention is a process for producing an extrusion molded body comprising the step of
A) mixing a cellulose ether that has a solubility in water of at least one gram in 100 grams of distilled water at 25 °C and 1 atmosphere; having a median particle length of from 110 to 300 micrometers, determined as described in the specification, with a ceramic-forming material, an aqueous diluent and optional additives to produce a pasty mass,
B) optionally passing the pasty mass through a wire screen and
C) subjecting the pasty mass to extrusion molding to produce an extrusion molded body; wherein
the cellulose ether has been obtained by drying-grinding a moist cellulose ether having a moisture content of from 35 to 90 percent, based on the total weight of the moist cellulose ether, in a gas-swept impact mill to a median particle length of from 110 to 300 micrometers.

### DESCRIPTION OF EMBODIMENTS

Surprisingly, it has been found that plugging of devices, such as wire screens or dies, that is caused by a cellulose derivative when a composition comprising a ceramic-forming material and a cellulose derivative is extrusion-molded through such device can be reduced if the composition comprises a cellulose ether that has a solubility in water of at least one gram in 100 grams of distilled water at 25 °C and 1 atmosphere and a median particle length of from 110 to 300 micrometers, preferably from 120 to 270 micrometers, more preferably from 120 to 250 micrometers, and most preferably from 130 to 230 micrometers.

Cellulose derivatives having the above-mentioned particle size are obtainable by providing a moist cellulose derivative having a moisture content of from 35 to 98 percent, based on the total weight of the moist cellulose derivative, and drying-grinding the moist cellulose derivative in a gas-swept impact mill until the above-mentioned median particle length is obtained. The treatment of a moist cellulose derivative in a gas-swept impact mill is generally described in US Patent No.'s 6,509,461 and 7,259,257. US Patent No. 6,943,247 discloses the use of the cellulose derivatives treated as described in US Patent No. 6,509,461 in cement-based building material compositions, such as tile adhesives. The production of cellulose derivatives having the above-mentioned particle size is described in more detail below.

Preferred cellulose derivatives are cellulose esters or cellulose ethers. Preferred cellulose ethers are carboxy-C₁-C₃-alkyl celluloses, such as carboxymethyl celluloses; carboxy-C₁-C₃-alkyl hydroxy-C₁-C₃-alkyl celluloses, such as carboxymethyl hydroxyethyl celluloses; C₁-C₃-alkyl celluloses, such as methylcelluloses; C₁-C₃-alkyl hydroxy-C₁₋₃-alkyl celluloses, such as hydroxyethyl methylcelluloses, hydroxypropyl methylcelluloses or ethyl hydroxyethyl celluloses; hydroxy-C₁₋₃-alkyl celluloses, such as hydroxyethyl celluloses or hydroxypropyl celluloses; mixed hydroxy-C₁-C₃-alkyl celluloses, such as hydroxyethyl hydroxypropyl celluloses, or alkoxy hydroxyethyl hydroxypropyl celluloses, the alkoxy group being straight-chain or branched and containing 2 to 8 carbon atoms. The cellulose derivatives are generally water-soluble, which means that they generally have a solubility in water of at least 1 gram, more preferably at least 2 grams, most preferably at least 5 grams in 100 grams of distilled water at 25 °C and 1 atmosphere.

Most preferably, the water-soluble cellulose ether is a methylcellulose with a methyl degree of substitution DS_{methyl} of from 1.2 to 2.2, preferably from 1.5 to 2.0; or a hydroxypropyl methylcellulose with a DS_{methyl} of from 0.9 to 2.2, preferably from 1.1 to 2.0, and an MS_{hydroxypropyl} of from 0.02 to 2.0, preferably from 0.1 to 1.2; or a hydroxyethyl methylcellulose with a DS_{methyl} of from 1.15 to 2.3, preferably from 1.15 to 2.2, and an MS_{hydroxyethyl} of from 0.03 to 1.0, preferably from 0.05 to 0.9; or a hydroxyethyl cellulose with an MS_{hydroxyethyl} of from 1.2 to 3.0, preferably from 1.45 to 2.5. The determination of the ether side groups, i.e. the DS_{methyl}, MS_{hydroxyethyl} and MS_{hydroxypropyl} can be effected as described by K.L. Ketterer, W.E. Kester, D.L. Wiederrich, and J.A. Grover, Determination of Alkoxyl Substitution in Cellulose Ethers by Zeisel-Gas Chromatographie, Analytical Chemistry, Vol. 51, No. 13, Nov 1979, 2172-76.

The viscosities of the water-soluble cellulose ethers can vary over a broad range. In one aspect of the present invention the viscosity of the cellulose ether is more than 150 mPa·s, preferably from 500 to 200,000 mPa·s, more preferably from 500 to 100,000 mPa·s, most preferably from 1000 to 80,000 mPa·s, particularly from 1000 to 60,000 mPa·s, determined in a 1.5 % by weight aqueous solution at 20 °C in a Haake RS600 rheometer with a cone and plate Geometry (CP-60/2°) at 20 °C and at a shear rate of 2.55 s⁻¹.

Water-soluble cellulose derivatives can be produced in a known manner. In a first step i) cellulose is treated with an alkali metal hydroxide to produce alkali cellulose. Step i) is typically conducted by intimate mixing of ground cellulose with an aqueous solution, preferably a 35 to 60 wt.-% aqueous solution, of an alkali metal hydroxide, in particular sodium hydroxide, in a mixer to give alkali metal cellulose. A known process is spray alkalization in a suitable mixing unit in which the ground cellulose is sprayed with the alkali metal hydroxide solution. Alternatively, ground cellulose is suspended in a suspension medium and the alkali metal hydroxide is then added. In a slurry alkalization process, the cellulose is suspended in alkali metal hydroxide solution and then passed through screw presses or sieve drum presses to remove excessive caustic alkali metal hydroxide. Occasionally the treatment of the cellulose with an aqueous solution of alkali metal hydroxide does not completely eliminate the crystallinity of the cellulose. While it would be desirable to transform cellulose completely to alkali cellulose, constraints in the production process can lead to residual amounts of non-reacted cellulose. The person skilled in the art knows what reaction conditions lead to increased amounts of non-reacted cellulose, such as the way of grinding of cellulose (pulp), which can result in undesired amounts of oversize particles which do not react, dead zones in reactor, or an inhomogeneous distribution of alkali metal hydroxide during alkalization.

In a further step ii) the alkali cellulose is reacted with a derivatizing agent to produce a water-soluble cellulose derivative. A preferred derivatizing agent is an esterifying agent or an etherifying agent, for example an alkyl halide such as methyl chloride and/or a hydroxyalkylating agent, such as ethylene oxide and/or propylene oxide and/or butylene oxide.

In a further step iii) the produced water-soluble cellulose derivative is typically washed to remove by-products. While the preferred washing liquor may depend on the specific type of cellulose derivative, preferred washing liquors generally are water, isopropanol, acetone, methylethylketone or brine. More preferably, water or brine is used as washing liquor. Cellulose derivatives are generally washed at a temperature of from 20 to 120 °C, preferably from 65 to 95°C. A solvent-moist, preferably a water-moist filter cake is obtained after washing and separating the cellulose derivative from the washing liquor. After the washing step the cellulose derivative generally has a moisture content of from 30 to 60 percent, typically from 45 to 55 percent, based on the total weight of the moist cellulose derivative.

The washed cellulose derivative is preferably subjected to a wetting step wherein the cellulose derivative is mixed with a liquid in a compounder to provide a moist cellulose derivative having a moisture content of from 35 to 98 percent, preferably from 40 percent to 90 percent, more preferably from 50 to 85 percent, and particularly from 60 to 75 percent, based on the total weight of the moist cellulose derivative. In the wetting step the moist cellulose derivative obtained in the washing step iii) can be mixed with an additional amount of liquid. Alternatively, the washed, moist water-soluble cellulose derivative is first subjected to a drying step and only then mixed with a liquid to provide a moist cellulose derivative having the above-mentioned moisture content. A partial or complete drying of the washed water-soluble cellulose derivative prior to contacting the cellulose derivative with an additional amount of liquid may be useful, for example, if a different washing liquor is used for washing the cellulose derivative than the subsequently used liquid or for constraints in the production process. The washed cellulose ether can be dried in a known manner, e.g., using a contact dryer, such as a steam tube dryer, commercially available from Louisville Dryer Company (Louisville, USA) or a plate dryer, commercially available from Krauss-Maffei, Germany, to provide a water-soluble cellulose derivative that has a moisture content of generally less than 30 percent, preferably less than 10 percent, more preferably less than 5 percent, based on the total weight of the moist cellulose derivative.

Useful liquids in the wetting step are, for example, water, isopropanol, acetone, methylethylketone or brine. Most preferably, water is used. The amount of liquid added to the water-soluble cellulose derivative should be adjusted to the moisture content of the cellulose derivative.

The temperature of the cellulose derivative in the wetting step is preferably in a range from 5 to 80 °C, more preferably from 5 to 65 °C, and most preferably from 10 to 50 °C. In the wetting step the use of a compounder is preferred which allows thorough and intense mixing. Useful compounders are, for example, granulators, kneaders, extruders, presses, or roller mills, wherein the mixture of the cellulose derivative and liquid is homogenized by applying shear forces and compounding, such as a twin-screw compounder. Co-rotating as well as counter-rotating machines are suitable. So-called divided trough kneaders with two horizontally arranged agitator blades that engage deeply with one another and that perform a mutual stripping action, as in the case of twin-screw compounders are particularly suitable. Suitable single-shaft, continuous kneaders include the so-called Reflector® compounders, which are high performance mixers of modular construction, consisting of a multi-part, heatable and coolable mixing cylinder and a unilaterally mounted blade mixer (manufacturer: Lipp, Germany). Also suitable are so-called pinned cylinder extruders or Stiftconvert® extruders (manufacturer: Berstorff, Germany). The pins incorporated in the housing serve as abutments in order to prevent the kneaded material rotating together with the shaft. Kneader mixers with so-called double-blade sigma stirrers (manufacturer: Fima, Germany) in a horizontal assembly are particularly suitable. The blades operate at different speeds and their direction of rotation can be reversed. A stirred vessel with a vertically arranged mixer shaft is also suitable if suitable flow baffles are mounted on the vessel wall in order to prevent the kneaded mass rotating together with the stirrer shaft, and in this way an intensive mixing action is imparted to the kneaded material (manufacturer: Bayer AG). Also suitable are double-walled mixing vessels with a planetary stirrer and inline homogenizer. The mixture obtained in the wetting step is a moist cellulose derivative which is usually in the shape of moist granules, moist lumps and/or a moist paste.

The moist cellulose derivative having a moisture content of from 35 to 98 percent, preferably from 40 percent to 90 percent, more preferably from 50 to 85 percent, and particularly from 60 to 75 percent, based on the total weight of the moist cellulose derivative, is subjected to drying-grinding in a gas-swept impact mill, preferably an air-swept impact mill, wherein the cellulose derivative is subjected to an impacting and/or shearing stress. Preferred gas-swept impact mills are Ultra Rotor mills (Altenburger Maschinen Jaeckering, Germany) or Turbofiner PLM mills (PALLMANN Maschinenfabrik GmbH & Co. KG, Germany). Gas classifier mills are also useful gas-swept impact mills, for example, the Hosokawa Alpine Air Classifier mill - ZPS Circoplex Hosokawa Micron Ltd., Cheshire, England. Drying is typically accomplished with a combination of hot gas and mechanical energy. Hot air is most commonly used but also hot nitrogen gas can be used. The hot gas and the wet product stream are generally fed via separate inlets into the mill, typically hot gas from the bottom and wet product at a side entrance via a feed screw system connected to the mill. Superheated vapor of a solvent, such as superheated steam, or a steam/inert gas mixture or a steam/air mixture can be used as heat-transfer gas and transport gas, as described in more detail in European Patent Applications EP 0 954 536 A1 (equivalent to US Patent No. 6,320,043) and EP 1 127 910 A1 (equivalent to US Patent No. 7,259,257). In the drying-grinding step the moisture content of the cellulose derivative is typically reduced to 1 to 20 percent, preferably 1 to 10 percent, more preferably 1 to 5 percent, based on the total weight of the moist cellulose derivative. The circumferential speed of the drying-grinding device is preferably controlled in a range from 35 to 140 m/s.

The dried and ground cellulose derivative is preferably subjected to gas classification, typically as described below. The finely divided solid materials may be discharged from a grinding zone of the drying-grinding device as finished product together with the transport gas. Grit content which may possibly be present can be separated from the fine material. The grit content may be returned to the grinding zone of the drying-grinding device. The finely divided solid particles are preferably separated from the flow of gas in a separator arranged down-stream the drying-grinding device. The separator is preferably designed to conduct gas classification, such as air classification. It can be a centrifugal separator such as, for example, a cyclone, or a filtering separator such as a sifter. Depending on the construction of the drying-grinding device, a gas classification may already take place in the drying-grinding device. The transport gas may be recycled to the drying-grinding device, but it is preferably filtered to remove residual amounts of water-insoluble fibers in the transport gas.

The cellulose derivative is subjected to sufficient drying-grinding to provide a cellulose derivative having a median particle length of from 110 to 300 micrometers, preferably from 120 to 270 micrometers, more preferably from 120 to 250 micrometers, and most preferably from 130 to 230 micrometers. The median particle length is the LOP (50,3) as defined below. The length of the particle is defined as the longest direct distance between opposite ends of the particle inside the particle contour, designated as LOP (Length of Particle). "Direct" means without loops or branches. The LOP is preferably measured by a high speed image analysis system which combines particle size and shape analysis. This specific image analysis method is described in: W. Witt, U. Kohler, J. List, Current Limits of Particle Size and Shape Analysis with High Speed Image Analysis, PARTEC 2007. The LOP (50,3) is the median particle length and is defined as follows:
All particle size distributions, e.g. the LOP can be displayed and applied as number (0), length (1), area (2) or volume (3) distribution. Preferably the volume distribution of the LOP is calculated as cumulative distribution Q₃. The volume distribution within the particle length value LOP 50,3 is designated by the number 3 after the comma. The designation 50, reflecting the median value, stands for 50% of the length of particle distribution being smaller than the given value in µm and 50% being larger. The 50% LOP value is calculated by the image analyzer software. A high speed image analysis system is commercially available from Sympatec GmbH, Clausthal Zellerfeld, Germany as dynamic image analysis (DIA) system QICPIC™, as indicated above.

A composition which is suitable for producing extrusion-molded bodies preferably comprises from 85 to 99 percent, more preferably from 90 to 99 percent of a ceramic-forming material a) and from 1 to 15 percent, more preferably from 1 to 10 percent, of the above-described cellulose derivative b), based on the total weight of the ceramic-forming material a) and the above-described cellulose derivative b).

The composition may comprise other components in addition to the ceramic-forming material a) and the above-described cellulose derivative b), such as one or more liquid diluents and one or more optional additives listed below. The amount of such other components, if present, usually is from 5 to 50 percent, preferably from 15 to 45 percent, more preferably from 30 to 40 percent, based on the total weight of the composition.

The ceramic-forming materials can be synthetically produced materials such as oxides, hydroxides, etc., or they can be naturally occurring minerals such as clays, talcs, or any combination of these. More preferably, the ceramic-forming material is an alumina or a precursor thereof, silica or a precursor thereof, an aluminate, aluminosilicate, alumina silica, feldspar, titania, fused silica, aluminum nitride, aluminum carbide, kaolin, cordierite or a precursor thereof, mullite or a precursor thereof, clay, bentonite, talc, zircon, zirconia, spinel, silicon carbide, silicon boride, silicon nitride, titanium dioxide, titanium carbide, boron carbide, boron oxide, borosilicate, soda barium borosilicate, silicates and sheet silicates, a silicon metal, soda lime, zeolite, barium titanate, lead titanate zirconate, aluminium titanate, barium ferrite, strontium ferrite, carbon, ground glass, rare earth oxides, or a combination of two or more of such inorganic materials. Alternatively, the ceramic-forming material is selected from metalloceramic materials comprising metals produced by flame-spray-synthesis in the particle size range of 0.1-100 µm, wherein the metals are based on steel and/or iron and/or aluminum and/or copper with different alloying elements such as Cr, Ni, Mo, Mn or V. The term "clay" means a hydrated aluminum silicate having a platy structure and forms plastic masses when mixed with water. Typically, clays are comprised of one or more crystalline structures such as kaolins, illites and smectites. Preferred oxides are those that form cordierite or mullite when mixed with clay (e.g., silica and talc for forming cordierite and alumina when forming mullite).

The composition preferably is in the form of a paste to enable extrusion. Generally, the composition additionally comprises a diluent which is liquid at 25 °C and provides a medium for the cellulose derivative to dissolve in thus providing plasticity to the batch and wetting of the powders. The liquid diluent is preferably an aqueous diluent, preferably water which is optionally with a water-miscible solvent. Most preferably water is used as the liquid diluent. The extrudable composition preferably comprises from 10 to 60 weight parts, more preferably from 20 to 50 weight parts, most preferably from 15 to 40 weight parts of the liquid diluent per 100 weight parts of the ceramic-forming material a).

The composition may further comprise other additives such as surfactants, lubricants and pore-forming materials.

Non- limiting examples of surfactants that can be used in the practice of the present invention are C₈ to C₂₂ fatty acids and/or their derivatives. Additional surfactant components that can be used with these fatty acids are C₈ to C₂₂ fatty esters, C₈ to C₂₂ fatty alcohols, and combinations of these. Exemplary surfactants are stearic, lauric, oleic, linoleic, palmitoleic acids, and their derivatives, stearic acid in combination with ammonium lauryl sulfate, and combinations of all of these. Most preferred surfactants are lauric acid, stearic acid, oleic acid, and combinations of these. The amount of surfactants typically may be from 0.5 to 3 percent, based on the weight of the ceramic-forming material a).

Non-limiting examples of lubricants are for example polyethylene oxide homopolymers, copolymers and terpolymers, glycols, or oil lubricants, such as light mineral oil, corn oil, high molecular weight polybutenes, polyol esters, a blend of light mineral oil and wax emulsion, a blend of paraffin wax in corn oil, and combinations of these. Typically, the amount of oil lubricants may be from 0.1 to 10 percent, more typically from 0.3 to 6 percent, based on the weight of the ceramic-forming material a).

Another aspect of the present invention is a method for producing an extrusion molded body, preferably an extrusion-molded hollow body, which comprises the step of subjecting the above described composition of the present invention to extrusion molding. The process for producing an extrusion molded body comprises the step of A) mixing a cellulose derivative having a median particle length of from 110 to 300 micrometers, preferably from 120 to 270 micrometers, more preferably from 120 to 250 micrometers, and most preferably from 130 to 230 micrometers, with a ceramic-forming material, a liquid diluent and optional additives to produce a pasty mass, wherein the cellulose derivative has been obtained by drying-grinding a moist cellulose derivative having a moisture content of from 35 to 90 percent, based on the total weight of the moist cellulose derivative, in a gas-swept impact mill to an above-mentioned median particle length, B) optionally passing the pasty mass through a wire screen and C) subjecting the pasty mass to extrusion molding to produce an extrusion molded body. Uniform mixing of the ceramic-forming material a), the cellulose derivative b), a liquid diluent c), such as water, and optionally other additives such as surfactants, lubricants and pore-forming materials can be accomplished by, for example, in a known conventional kneading process.

When the pasty mass is formed, the cellulose derivative does not maintain its original median particle length of from 110 to 300 micrometers but is dissolved in the liquid diluent, such as water. It has been found by the inventors of the present patent application that a smaller original median particle length leads to decreased plugging. The reason for this observation is not fully understood by the inventors. Without wanting to be bound by the theory, the inventors believe that the grinding of the cellulose derivative to obtain a median particle length of from 110 to 300 micrometers, preferably from 120 to 270 micrometers, more preferably from 120 to 250 micrometers, and most preferably from 130 to 230 micrometers, particularly the above-described wetting and drying-grinding of the cellulose derivative leads to a reduction of the water-insoluble portions of the water-soluble cellulose derivative. However, the mechanism for reducing the water-insoluble portions of the water-soluble cellulose derivative is not fully understood.

When the pasty mass is passed through a wire screen, e.g. for filtering the mass before it is subjected to extrusion molding, the wire screen preferably has a mesh width of from 20 to 100 micrometers, more preferably from 30 to 60 micrometers. Although the pasty mass can be extruded to bodies of any convenient size and shape, the unexpected advantages of reduced plugging during extrusion of the composition of the present invention are particularly noticeable when extrusion-molded bodies of thin cell walls, for example cellular bodies such as honeycombs are produced. When extruding bodies having a honeycomb structure, the width of the extrusion channels becomes less and the danger of plugging the extrusion channels when the molding material passes through the extrusion channels increases significantly. Generally, honeycomb densities range from 15 cells/cm² to 235 cells/cm². Typical wall thicknesses are from 0.05 to 0.65 mm, preferably from 0.05 to 0.10 mm.

The pasty mass can be shaped into a green body by any known conventional ceramic extrusion process. In an exemplary aspect, extrusion can be done using a hydraulic ram extrusion press, or a two stage de-airing single auger extruder, or a twin screw extruder with a die assembly attached to the discharge end.

The prepared green body can then be dried to remove excess moisture. The drying can be performed by hot air, or steam, dielectric drying or microwave heating, which can be followed by air drying. Once dried, the green body can thereafter be fired under conditions effective to convert the green body into a sintered or baked article according to known techniques. The firing conditions of temperature and time depend on the composition and size and geometry of the body, and the invention is not limited to specific firing temperatures and times. Typical temperatures are from 600 °C to 2300°C, and the holding times at these temperatures are typically from 1 hour to 20 hours.

Dried and sintered or baked extrusion-molded bodies find use in a number of applications such as carriers for catalysts, as catalysts, heat exchangers, or filters, for example as diesel particulate filters, molten metal filters and regenerator cores. In a preferred aspect, the composition and the method of the present invention is well suited for the production of cellular bodies such as honeycombs. These cellular ceramic bodies are particularly useful as carriers for catalysts, as catalysts, as heat exchangers or as filters, particularly for exhaust gas treatment.

It should be understood that the particular desired size and shape of the produced ceramic body can depend on the application, e.g., in automotive applications by engine size and space available for mounting. Although the extrusion-molded bodies of the instant invention are, in one aspect, suitable for preparing thin-walled honeycombs, the claimed mixtures can also be used for thicker walled structures. For example, honeycombs structures having 15 to 30 cells/cm² and 0.30 to 0.64 mm wall thicknesses are well suited for diesel particulate filter applications.

Some embodiments of the invention will now be described in detail in the following Examples.

### EXAMPLES

Unless otherwise mentioned, all parts and percentages are by weight. In the Examples the following test procedures are used.

### Example 1-3

### Production of the Cellulose Ether having the desired Median Particle Length

A commercially available continuous compounder with a heating and cooling jacket was used to add water to a commercially available dry cellulose ether having a degree of substitution of methoxyl groups of 28.7% and hydroxypropoxyl groups of 6.9% and a viscosity of 41,365 mPa·s, measured as a 2 percent aqueous solution at 20°C according to Ubbelohde and a moisture level of 3.3%. The cellulose ether was fed continuously at a feed rate of 20 kg/h into the compounder.

The compounder jacket was supplied with a fluid of 0 °C to 70 °C. Water of a temperature of 0 °C to 60 °C was continuously added at rates of 33 - 55 kg/h to the compounder resulting in a moisture level of about 64 - 75 %. The wet product was transported continuously via a transport belt into a mill feed unit (Altenburger Maschinen Jaeckering GmbH, Hamm, Germany). The bottom blades of the vessel agitator pressed the paste into a single auger screw mounted at the bottom of the vessel. The wet product was forced through a perforated plate directly into the side of an Ultrarotor II "S" gas-swept impact mill (Altenburger Maschinen Jaeckering GmbH, Hamm, Germany) between the first and second grinding stage. The mill was equipped with seven grinding stages. The bottom three grinding stages were equipped with standard grinding bars. Turbo-bars were installed in the top four grinding stages. A co-rotating finger sifter wheel with twelve blades was installed on the top of the 7th grinding stage. The interior of mill jacket had the standard Altenburger corrugated stationary grinding plates.

The rotor of the impact mill was operated at a circumferential speed of 114 m/s. A hot nitrogen stream was fed with 1068 - 1129 m³/h into the bottom of the mill.
A cyclone was used to separate the dried product from the nitrogen. The final product moisture was 1.5 - 2.1 % by weight. The detailed processing conditions are listed in Table 1 below.

**Table 1: Processing Conditions**

| Example | Jacket Temperature, °C | Water Temperature, °C | Water flow rate, m³/h | Moisture % | Nitrogen Flow rate, m³/h | Product moisture, % | LOP (50,3), µm |
|---|---|---|---|---|---|---|---|
| Feedstock (comparative) | | | | | | | 334 |
| 1 | 25 | 15 | 33.3 | 64.3 | 1080 | 1.5 | 249 |
| 2 | 70 | 16 | 51.6 | 73.9 | 1124 | 1.0 | 214 |
| 3 | 0 | 15 | 55 | 74.9 | 1071 | 2.1 | 150 |

| | | | | | | | |
|---|---|---|---|---|---|---|---|
| * Comparative Example | | | | | | | |

### Description of the Gel Extrusion Method

In order to detect plugging coming solely from the cellulose ether and not from the ceramic-forming materials it is necessary to make an extrusion test with a cellulose ether paste free of any ceramic-forming materials. In such a case the plugging coming from a cellulose ether can be detected in a very short time frame under realistic extrusion conditions. In the gel extrusion method a cellulose ether gel is extruded as a stiff paste through a metallic screen. The cellulose ether concentration in this aqueous gel is significantly higher compared to the cellulose ether concentration in a typical ceramic paste formulation used for extrusion. Due to this effect the decrease of extrusion speed due to increasing sieve blocking can be observed much faster than in a real ceramic extrusion trial run. The extrusion speed is measured indirectly by weighing the extruded gel paste output in steps of five minutes. The extrusion speed (output per minute) is recorded as a function of extrusion time. The analysis of the filter residue can be done by microscopic or other methods.

### Paste preparation for extrusion trials:

1.416 parts of dry cellulose ether powder were first put into a fluidized-bed mixer (20 1 mixer, M 20 MK with 1.5 kW engine, producer Lödige). When the mixer was running at 230 rpm, 3.584 parts of ice-cooled water were subsequently sprayed into the batch through a spraying nozzle. The spraying process took 5 min. After spraying in the water, the mixer continuously run for further 20 sec forming a turbid, white mass containing dumpling like particles of 0.5-2 cm diameter. This mass was fed into a cooled kneader (type AMK IIU, engine 2x 1.5 kW, usable vol. 20 1, total vol.351, cooled down to -5°C) and kneaded for five minutes. The paste was kept calm ("ripening") without kneading for 45 min and was kneaded a second time for further five min. The resulting paste temperature after this step was between 16 and 19°C.

### Procedure of the gel extrusion step:

After kneading, the batch was immediately introduced into the feed trough of a water-cooled, single-screw extruder (PZVE 8 D from Händle GmbH, Mühlacker, Germany, inner screw diameter 80 mm, feeder screw speed 12 r.p.m., auger screw speed 15 r.p.m). Subsequently the material was pressed through a steel filter of defined mesh sizes of 60 µm and a total diameter of 80 mm (square 5030 mm²). The real cross section of the out coming paste was reduced due to the steel support of the filter and the filter material itself. The steel support of the filter let open a square of 2695 mm². The extrusion speed was measured indirectly by weighting the extruded gel paste output in steps of five minutes. The extrusion temperature was held constant (always below 30°C) with water cooling in the extruder jacket. The material was discharged onto a conveyor belt and cut into samples. In order to get reproducible results it was required to keep the extruder always fully loaded with paste. The results of the trials are presented in the Table 2:

**Table 2:**

| **Example** | **LOP (50,3) (µm)** | **Throughput of extruded gel paste (g in 30 min.)** |
|---|---|---|
| Feedstock (comparative) | 334 | 1,500 |
| 1 | 249 | 1,700 |
| 2 | 214 | 1,800 |
| 3 | 150 | 2,350 |

Table 1 illustrates that cellulose derivative having a median particle length of from 110 to 300 micrometers, particularly those obtainable by drying-grinding a moist cellulose derivative in a gas-swept impact mill.

## Claims

1. Use of a cellulose ether that has a solubility in water of at least one gram in 100 grams of distilled water at 25 °C and 1 atmosphere; having a median particle length of from 110 to 300 micrometers, determined as described in the specification, for the production of an extrusion molded ceramic body, wherein the cellulose ether is obtainable by
- providing a moist cellulose derivative having a moisture content of from 35 to 98 percent, based on the total weight of the moist cellulose derivative, and drying-grinding the moist cellulose derivative in a gas-swept impact mill; or
- by mixing a cellulose derivative with a liquid to provide a moist cellulose derivative having a moisture content of from 35 to 98 percent, based on the total weight of the moist cellulose derivative, and drying-grinding the moist cellulose derivative in a gas-swept impact mill.

2. Use according to claim 1, the cellulose ether having a solubility in water of at least two grams, more preferably of at least 5 grams in 100 grams of distilled water at 25 °C and 1 atmosphere.

3. Use according to claim 1 wherein the cellulose ether has a median particle length of from 120 to 270 micrometers.

4. Use according to of any one of the preceding claims wherein the extrusion molded ceramic body is produced from a composition comprising
a) a ceramic-forming material selected from an alumina or a precursor thereof, silica or a precursor thereof, an aluminate, aluminosilicate, alumina silica, feldspar, titania, fused silica, aluminum nitride, aluminum carbide, kaolin, cordierite, mullite, clay, bentonite, talc, zircon, zirconia, spinel, silicon carbide, silicon boride, silicon nitride, titanium dioxide, titanium carbide, boron carbide, boron oxide, borosilicate, soda barium borosilicate, a silicate, a sheet silicate, a silicon metal, soda lime, zeolite, barium titanate, lead titanate zirconate, aluminium titanate, barium ferrite, strontium ferrite, carbon, ground glass, a rare earth oxide, or a combination of two or more of such inorganic materials; and
b) the cellulose ether.

5. Use according to any one of the preceding claims wherein the cellulose ether is a methylcellulose with a methyl degree of substitution DS_{methyl} of from 1.2 to 2.2; or a hydroxypropyl methylcellulose with a DS_{methyl} of from 0.9 to 2.2 and an MS_{hydroxypropyl} of from 0.02 to 2.0; or a hydroxyethyl methylcellulose with a DS_{methyl} of from 1.15 to 2.3 and an MS_{hydroxyethyl} of from 0.03 to 1.0; or a hydroxyethyl cellulose with an MS_{hydroxyethyl} of from 1.2 to 3.0

6. A process for producing an extrusion molded body comprising the step of
A) mixing a cellulose ether that has a solubility in water of at least one gram in 100 grams of distilled water at 25 °C and 1 atmosphere; having a median particle length of from 110 to 300 micrometers, determined as described in the specification, with a ceramic-forming material, an aqueous diluent and optional additives to produce a pasty mass,
B) optionally passing the pasty mass through a wire screen and
C) subjecting the pasty mass to extrusion molding to produce an extrusion molded body; wherein
the cellulose ether has been obtained by drying-grinding a moist cellulose ether having a moisture content of from 35 to 90 percent, based on the total weight of the moist cellulose ether, in a gas-swept impact mill to a median particle length of from 110 to 300 micrometers

7. A process according to claim 6, wherein the cellulose ether has a solubility in water of at least two grams, more preferably of at least 5 grams in 100 grams of distilled water at 25 °C and 1 atmosphere;

8. The process of claim 6 or 7 wherein an extrusion molded body having a honeycomb structure is produced.

9. The process of any one of claims 6 to 8 wherein the extrusion molded body is subjected to drying and baking or sintering.

## Patentansprüche

1. Verwendung eines Celluloseethers, der eine Löslichkeit in Wasser von mindestens einem Gramm in 100 Gramm destilliertem Wasser bei 25 °C und 1 Atmosphäre aufweist; der eine mittlere Partikellänge von 110 bis 300 Mikrometer aufweist, die bestimmt wird wie in der Beschreibung beschrieben, zur Herstellung eines durch Extrusion geformten Keramikkörpers, wobei der Celluloseether erhalten wird durch
- Bereitstellen eines feuchten Cellulose-Derivats, das bezogen auf das Gesamtgewicht des feuchten Cellulose-Derivats einen Feuchtegehalt von 35 bis 98 Prozent aufweist, und Trockenmahlen des feuchten Cellulose-Derivats in einer mit Gas überstrichenen Prallmühle; oder
- durch Mischen eines Cellulose-Derivats mit einer Flüssigkeit, um ein feuchtes Cellulose-Derivat bereitzustellen, das bezogen auf das Gesamtgewicht des feuchten Cellulose-Derivats einen Feuchtegehalt von 35 bis 98 Prozent aufweist, und Trockenmahlen des feuchten Cellulose-Derivats in einer mit Gas überstrichenen Prallmühle.

2. Verwendung nach Anspruch 1, wobei der Celluloseether eine Löslichkeit in Wasser von mindestens zwei Gramm, mehr bevorzugt mindestens 5 Gramm in 100 Gramm destilliertem Wasser bei 25 °C und 1 Atmosphäre aufweist.

3. Verwendung nach Anspruch 1, wobei der Celluloseether eine mittlere Partikellänge von 120 bis 270 Mikrometer aufweist.

4. Verwendung nach einem der vorhergehenden Ansprüche, wobei der durch Extrusion geformte Keramikkörper hergestellt wird aus einer Zusammensetzung, die umfasst:
a) ein Keramik bildendes Material, das ausgewählt wird aus Aluminiumoxid oder einem Vorläufer davon, Siliciumdioxid oder einem Vorläufer davon, einem Aluminat, Aluminosilicat, Aluminiumoxid-Siliciumdioxid, Feldspat, Titandioxid, Quarzglas, Aluminiumnitrid, Aluminiumcarbid, Kaolin, Cordierit, Mullit, Ton, Bentonit, Talk, Zirkon, Zirconiumdioxid, Spinell, Siliciumcarbid, Siliciumborid, Siliciumnitrid, Titandioxid, Titancarbid, Borcarbid, Boroxid, Borosilikat, Soda-Barium-Borosilikat, einem Silicat, einem Phyllosilicat, einem Silicium-Metall, Natronkalk, Zeolith, Bariumtitanat, Bleititanat-zirconat, Aluminiumtitanat, Bariumferrit, Strontiumferrit, Kohlenstoff, gemahlenem Glas, einem Seltenerdoxid oder einer Kombination von zwei oder mehr solcher anorganischen Materialien; und
b) den Celluloseether.

5. Verwendung nach einem der vorhergehenden Ansprüche, wobei der Celluloseether eine Methylcellulose ist, die einen Methylsubstitutionsgrad DS_{Methyl} von 1,2 bis 2,2 aufweist; oder eine Hydroxypropylmethylcellulose mit einem DS_{Methyl} von 0,9 bis 2,2 und einem MS_{Hydroxypropyl} von 0,02 bis 2,0; oder eine Hydroxyethylmethylcellulose mit einem DS_{Methyl} von 1,15 bis 2,3 und einem MS_{Hydroxyethyl} von 0,03 bis 1,0; oder eine Hydroxyethylcellulose mit einem MS_{Hydroxyethyl} von 1,2 bis 3,0.

6. Verfahren zum Herstellen eines durch Extrusion geformten Körpers, umfassend den Schritt bestehend aus
A) Mischen eines Celluloseethers, der eine Löslichkeit in Wasser von mindestens einem Gramm in 100 Gramm destilliertem Wasser bei 25 °C und 1 Atmosphäre aufweist; der eine mittlere Partikellänge von 110 bis 300 Mikrometer aufweist, bestimmt wie in der Beschreibung beschrieben, mit einem Keramik bildenden Material, einem wässrigen Verdünnungsmittel und beliebigen Zusätzen, um eine pastenartige Masse zu bilden,
B) wahlweise die pastenartige Masse durch ein Drahtsieb geben und
C) die pastenartige Masse einem Extrusionsformen unterwerfen, um einen durch Extrusion geformten Körper zu erzeugen; wobei
der Celluloseether erhalten wurde durch Trockenmahlen eines feuchten Celluloseethers mit einem auf das Gesamtgewicht des feuchten Celluloseethers bezogenen Feuchtegehalt von 35 bis 90 Prozent in einer mit Gas überstrichenen Prallmühle bis zu einer mittleren Partikellänge von 110 bis 300 Mikrometer.

7. Verfahren nach Anspruch 6, wobei der Celluloseether eine Löslichkeit in Wasser von mindestens zwei Gramm, mehr bevorzugt von mindestens 5 Gramm in 100 Gramm destilliertem Wasser, bei 25 °C und 1 Atmosphäre, aufweist;

8. Verfahren nach Anspruch 6 oder 7, wobei ein durch Extrusion gebildeter Körper erzeugt wird, der eine Honigwaben-Struktur aufweist.

9. Verfahren nach einem der Ansprüche 6 bis 8, wobei der durch Extrusion geformte Körper einen Trocknen und Brennen oder Sintern unterworfen wird.

## Revendications

1. Utilisation d'un éther de cellulose qui présente une solubilité dans l'eau d'au moins un gramme dans 100 grammes d'eau distillée à 25 °C et à 1 atmosphère ; qui présente une longueur médiane de particule qui est comprise entre 110 et 300 micromètres, qui est déterminée tel que décrit dans la description, pour la fabrication d'un corps en céramique moulé par extrusion, dans laquelle l'éther de cellulose peut être obtenu en
- fournissant un dérivé de cellulose humide qui présente une teneur en humidité qui est comprise entre 35 et 98 pour cent, sur la base du poids total du dérivé de cellulose humide, et en séchant-broyant le dérivé de cellulose humide à l'intérieur d'un broyeur à impact à balayage de gaz ; ou en
- mélangeant un dérivé de cellulose avec un liquide pour fournir un dérivé de cellulose humide qui présente une teneur en humidité qui est comprise entre 35 et 98 pour cent, sur la base du poids total du dérivé de cellulose humide, et en séchant-broyant le dérivé de cellulose humide à l'intérieur d'un broyeur à impact à balayage de gaz.

2. Utilisation selon la revendication 1, l'éther de cellulose présentant une solubilité dans l'eau d'au moins deux grammes, de manière plus préférée, d'au moins 5 grammes dans 100 grammes d'eau distillée à 25 °C et à 1 atmosphère.

3. Utilisation selon la revendication 1, dans laquelle l'éther de cellulose présente une longueur médiane de particule qui est comprise entre 120 et 270 micromètres.

4. Utilisation selon l'une quelconque des revendications précédentes, dans laquelle le corps en céramique moulé par extrusion est fabriqué à partir d'une composition qui comprend :
a) un matériau de formation de céramique qui est sélectionné parmi une alumine ou un précurseur de celle-ci, une silice ou un précurseur de celle-ci, un aluminate, un aluminosilicate, une silice d'alumine, un feldspath, un dioxyde de titane, une silice fondue, un nitrure d'aluminium, un carbure d'aluminium, un kaolin, une cordiérite, une mullite, une argile, une bentonite, un talc, un zircone, un zirconium, un spinel, un carbure de silicium, un borure de silicium, un nitrure de silicium, un dioxyde de titane, un carbure de titane, un carbure de bore, un oxyde de bore, un borosilicate, un borosilicate de baryum sodique, un silicate, un phyllosilicate, un silicium métal, une chaux sodée, une zéolite, un titanate de baryum, un zirconate de titanate de plomb, un titanate d'aluminium, une ferrite de baryum, une ferrite de strontium, un carbone, du verre dépoli, un oxyde des terres rares ou une combinaison de deux ou plus de ces matériaux inorganiques ; et
b) l'éther de cellulose.

5. Utilisation selon l'une quelconque des revendications précédentes, dans laquelle l'éther de cellulose est une méthylcellulose qui présente un degré de substitution de méthyle DS_{méthyle} qui est compris entre 1,2 et 2,2 ; ou une méthylcellulose d'hydroxypropyle qui présente un DS_{méthyle} qui est compris entre 0,9 et 2,2 et un MS_{hydroxypropyle} qui est compris entre 0,02 et 2,0 ; ou une méthylcellulose d'hydroxyéthyle qui présente un DS_{méthyle} qui est compris entre 1,15 et 2,3 et un MS_{hydroxyéthyle} qui est compris entre 0,03 et 1,0 ; ou une cellulose d'hydroxyéthyle qui présente un MS_{hydroxyéthyle} qui est compris entre 1,2 et 3,0.

6. Procédé pour la fabrication d'un corps moulé par extrusion, comprenant l'étape constituée par
A) le mélange d'un éther de cellulose qui présente une solubilité dans l'eau d'au moins un gramme dans 100 grammes d'eau distillée à 25 °C et à 1 atmosphère ; qui présente une longueur médiane de particule qui est comprise entre 110 et 300 micromètres, qui est déterminée tel que décrit dans la description, avec un matériau de formation de céramique, un diluant aqueux et des additifs optionnelspour produire une masse pâteuse ;
B) en option, le passage de la masse pâteuse au travers d'un tamis en fils métalliques ; et
C) la soumission de la masse pâteuse à un moulage par extrusion pour fabriquer un corps moulé par extrusion ; dans lequel
l'éther de cellulose a été obtenu par séchage-broyage d'un éther de cellulose humide qui présente une teneur en humidité qui est comprise entre 35 et 90 pour cent, sur la base du poids total de l'éther de cellulose humide, à l'intérieur d'un broyeur à impact à balayage de gaz jusqu'à une longueur médiane de particule comprise entre 110 et 300 micromètres.

7. Procédé selon la revendication 6, dans lequel l'éther de cellulose présente une solubilité dans l'eau d'au moins deux grammes, de manière plus préférée, d'au moins 5 grammes dans 100 grammes d'eau distillée à 25 °C et à 1 atmosphère.

8. Procédé selon la revendication 6 ou 7, dans lequel un corps moulé par extrusion qui présente une structure alvéolaire en nid d'abeille est fabriqué.

9. Procédé selon l'une quelconque des revendications 6 à 8, dans lequel le corps moulé par extrusion est soumis à un séchage et à une cuisson ou un frittage.
